(19) Europäisches Patentamt
European Patent Office
Office européen des brevets

(11) **EP 2 728 926 A1**

(12) **EUROPEAN PATENT APPLICATION**

(43) Date of publication:
**07.05.2014 Bulletin 2014/19**

(51) Int Cl.:
***H04W 28/08*** (2009.01)

(21) Application number: **12290382.6**

(22) Date of filing: **05.11.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent**
**75007 Paris (FR)**

(72) Inventors:
• **Kuzminskiy, Alexandr**
**Peatmoor**
**Swindon, SN5 5BG (GB)**
• **Yang, Jun**
**Peatmoor**
**Swindon, SN5 5BG (GB)**

• **Rao, Anil**
**Wheaton**
**Illinois 60189 (US)**
• **Tao, Huiyu**
**Abingdon OX14 2AR (GB)**

(74) Representative: **Lupton, Frederick**
**51 Bullens Green Lane**
**Colney Heath**
**St. Albans, Herts. AL4 0QR (GB)**

Remarks:
Amended claims in accordance with Rule 137(2) EPC.

(54) **Load balancing in mobile telecommunications networks**

(57) Load balancing in a heterogeneous network (HetNet) comprising macro cells and small cells, comprises a first virtual optimisation stage (Stage 1) which involves, for each small cell, adjusting handover conditions to neighbouring cells (2, 6-10) by means of a bias value to find optimised bias values on the basis of maximising a preselected Key Performance Indicator (KPI) (Cell Edge Throughput) for user stations, and a second virtual optimisation stage (stage 2) which involves, forming a group of user stations (12, 14) from the output of the first stage which may have a significant impact on the KPI, testing reassociations with neighbouring cells of user stations within the group (16-24), including calculation of KPI values, in order to define an optimized set of user stations associated with the cells of the network, and requiring the heterogeneous network to adopt associations corresponding to the optimized set.

FIG. 1

**Description**

Field of the Invention

The present invention relates to mobile telecommunications systems, and in particular to balancing of loads of users stations between neighbouring cells within such systems.

Background Art

Load balancing and radio coverage optimization of base stations (BSs) is an important element in improving the overall performance of networks, in particular so-called HetNets, heterogeneous networks, which are a mixture of macro cells and small cells. Small cells such as metro cells, micro cells, pico cells, and femto cells, are cells much smaller in dimensions than macro cells, macro cells usually having dimensions of kilometres, whereas small cells such as femto cells may have dimensions of tens of meters. Optimisation in general involves balancing various factors and requirements so as to achieve resultant loads and coverage which are a reasonable compromise between them.

A technical problem is that the efficiency of metro/pico cells in heterogeneous (HetNet) networks may be limited because of the low coverage of low power pico cells, especially in areas with strong macro cell coverage, since users will associate preferentially with a macro cell, having a stronger SINR ratio. One known solution to this problem is a range expansion for load balancing between the macro and pico base stations (BS). This can be achieved by biasing handover decisions between the different BSs such that user stations (UEs) are handed over to pico BSs earlier than usual: see. I. Guvenc, "Capacity and fairness analysis of heterogeneous networks with range expansion and interference coordination," IEEE Communications Letters, vol. 15, no. 10, pp. 1084-1087, Oct. 2011. Typically, only relatively low bias values may be employed with limited gain, as large bias values would lead to low signal-to-interference-plus-noise ratio (SINR or Eclo in WCDMA terminology (Eclo being Chip Energy divided by interference level)) and control channel performance would be severely impacted

Another problem with range expansion by means of bias selection is that the bias impact depends not only on pico cell location in the Macro-sector, but also on non-uniform UE distributions within the cells. This means that a fixed range expansion may lose its efficiency in practical time varying conditions.

An optimization criterion which modifies the handover bias value with a factor which is dependent on users associated with a base station, is proposed in Q. Ye, B. Rong, Y. Chen, M. Al-Shalash, C. Caramanis, J. G. Andrews, "User Association for Load Balancing in Heterogeneous Cellular Networks," 13.05.2012, see http://arxiv.org/pdf/1205.2833.pdf. This theoretical proposal is applied only for optimization of one bias value for all pico BSs in the optimization area, and is based on maximization of the sum of logarithms of user SINR divided by the number of users associated with a corresponding BS.

Summary of the Invention

For the purposes of the present specification, the following definitions apply:

**Heterogeneous Network -** otherwise denoted as HetNet, comprises at least one macro cell and at least one small cell within the area of a macro cell.

**Small Cell -** A small cell comprises cells known as metro cells, micro cells, pico cells, and femto cells which have much smaller dimensions than macro cells, macro cells usually having dimensions of kilometres, whereas small cells such as femto cells may have dimensions of tens of meters or less.

**User Station -** depending on the mobile system in operation, this is also termed user equipment (UE), mobile station; that is the downlink terminal receiving transmissions from the base station of the cell.

**Base Station (BS)-** depending on the mobile system in operation, this is also termed Node B, home Node B, eNode B; that is the entity directly defining and controlling the associated small or macro cell.

**Macro-Sector -** refers to a macro cell controlled by a base station, and all small cells within the coverage area or domain of the macro cell.

**Key Performance Indicator -** otherwise known as KPI, this is a value which represents an aspect of the quality of the network. There are various commonly accepted KPIs, but of particular interest are those relating to data rate throughput of user stations, including cell edge throughput, average or medium cell throughput.

**Cell Edge Throughout -** this is the minimum data throughput rate that a user station within a cell will experience, and is represented as the 5% point of the cumulative distribution function (CDF) of the data throughput of a user within the cell.

Embodiments of the invention provide a network dynamic direct association of high data rate user stations (UEs) for initial self-calibration to set initial parameters of the system. Over the course of time, conditions may alter, and embodiments permit updating of parameters by adaptive range user association, thereby permitting self organisation of a time varying WCDMA HetNet (see technical standard 3GPP.TS.32.500 - Self-Organising Networks). Thus, this direct association dynamically controls a (low-mobility) HetNet leading to re-association of a few user stations at each iteration according to a slowly changing environment.

This can be implemented at the Radio Network Controller (RNC) on a macro cell basis, by which is meant the RNC calculates separately user associations for each macro cell and included small cells (in WCDMA networks, one or more Radio Network Controllers in a UTRAN (Radio Access Network) each controls a plurality of Node Bs (Base Stations), each Node B defining a respective macro cell).

One embodiment contains two virtual optimization stages: 1) Individual bias optimization for each small cell BS in the Macro-sector; and 2) UE-by-UE fine association tuning in a group of UEs within the Macro-sector with the main impact on the optimization KPI (Key Performance Indicator). The optimised user associations are sent direct to the HetNet, requiring user stations in the network to be correspondingly reassociated, and adjustment of small cell bias values may be unnecessary (The RNC provides rules for handover which are more complex than simply on the basis of Eclo and available power). In a preferred embodiment however, both bias and UE association in the group of UEs are output to the HetNet. Thus at stage 2), the controlling RNC may change UE association only in a (small) group of selected candidates that may have the main impact on the KPI. The associations of the rest of UEs are controlled by the bias values updated at stage 1), and sent to the small cells in the Het Net.

Embodiments of the invention employing virtual optimisation require "real" signal reports (available power, Eclo values) as inputs from the HetNet as will be explained below. "Virtual" means that we select some bias values (stage 1) and UE association in the group of candidates (stage 2) and use the "real" signal reports from the network to predict the KPI without implementation of this user association in the real network.

Hence, embodiments permit individual UE association in the network to the best, second best or other available BSs for KPI optimization, which is more efficient than the prior art pico BS based bias optimization having handover principally on the basis of Eclo values.

In other embodiments, only stage 1) may be employed, where a sufficiently fine tuning is obtained by bias optimisation alone, and in other embodiments only stage 2) may be employed, where a complete alternative to bias optimisation is desired. In a two stage optimisation process, any suitable initialisation process may be used in the first stage for setting handover conditions. In circumstances where only the first stage is employed, the computed bias values may be adopted by the HetNet. Where only the second stage is employed, only reassociations of user stations are required to be adopted by' the HetNet. In circumstances where both the first and second stages are employed, reassociations of user stations are sent to the HetNet; computed bias optimisation values may additionally be sent to the HetNet, provided they do not violate the reassociation conditions of the second stage. In any event the rules for permitting handover within the cells in the macro sector are flexible, such as to permit the selected reassociations.

Embodiments of the invention may be incorporated in multicarrier systems where two or more carrier frequencies are provided for carrying respective traffic channels. Essentially this requires bias optimisation processes and user station association processes to be carried out simultaneously over all carriers for each Macro-sector for both inter-carrier and intra-carrier handovers.

Whereas said mobile telecommunications system may be of any known type, in use or envisaged, e.g., GSM, GSM/EDGE, UMTS, WCDMA, HSPA, 3GPP, LTE, 4G, the invention is especially applicable to WCDMA systems. Furthermore, embodiments of the invention are particularly concerned with those user stations using the HSDPA (High Speed Downlink Packet Access), as specified in Release 5 onwards of the 3GPP standards, as opposed to those user stations using slower speed Release 99 3GPP downlink, since higher rates of data transmission will more greatly affect User Association considerations.

In embodiments, the first virtual optimisation stage may comprise provision of a database which is formed by preliminary simulations of typical propagation and traffic conditions within the subject mobile system, and stores for example average data throughput in user stations against variables such as Eclo (SINR), available power in a HSDPA (High Speed Downlink Packet Access), and the number of user stations per cell. An interpolator processes this data with a parameter from the HetNet, such as downlink transmission power, to calculate for example average data throughput for each user station in the database. An appropriate KPI such as cell edge throughput is then calculated for each such user station. A virtual bias process is carried out to calculate change in KPI for incremental changes to the pico cell bias for handover decisions. A user station distribution process is then carried out, which accepts an input variable from the HetNet such as actual Eclo for current and neighbouring cells, and processes this with the output from the virtual bias process to compute a user station association. This association is iteratively varied out, to permit calculation of an optimised virtual bias value and virtual optimised user station association for each small cell, on the basis of a maximised KPI value.

The second optimisation stage accepts as inputs from the bias controller of the first stage, the optimised virtual user station association and corresponding throughput values. A group of user stations is then selected by means of a sorting and selection process, where the grouping may have a significant impact on the optimisation KPI computed by the first stage. The selection process involves using actual Eclo values for current cells and neighbouring cells, and a threshold value, for reassociation to neighbouring cells, being a difference of Eclo values between current cell and reassociated cell. The possible reassociations are enumerated, combined with the other user stations, and resulting KPI values are computed. A selector selects from these possible reassociations, those that give the best KPI, and this optimised reassociation is required to be adopted by user stations within the HetNet.

The present invention provides in a most general aspect, a method for optimisation of radio coverage in a heterogeneous network comprising at least one macro cell and at least one small cell including:

forming a group of user stations from user stations which may be allocated to the network, which group may have a significant impact on a preselected Key Performance Indicator (KPI) of the network, and testing reassociations with neighbouring cells of user stations within said group on the basis of signal reports from the heterogeneous network, including calculation of values of said preselected KPI of each user station within said group for each reassociation, in order to define, on the basis of said calculation of KPI values an optimized set of user stations associated with the cells in the network,
and requiring reassociation of user stations within said heterogeneous network, corresponding to said optimized set.

The present invention further provides in a general aspect, a method for optimisation of radio coverage in a heterogeneous network comprising at least one macro cell and at least one small cell including:

a first optimisation stage which involves optimising a virtual collection of user stations associated with the network by adjusting handover conditions of each said small cell to neighbouring cells to give a maximised value of said preselected Key Performance Indicator (KPI) for said collection of user stations,
a second optimisation stage which involves forming a group of user stations from the optimised collection of user stations allocated to the network, which group may have a significant impact on said preselected Key Performance Indicator (KPI) for the network, and testing reassociations with neighbouring cells of user stations within said group on the basis of signal reports from the heterogeneous network, including calculation of values of said preselected KPI of each user station within said group, in order to define, on the basis of said calculation of KPI values, an optimized set of user stations associated with the cells in the network,
and requiring reassociation of user stations within said heterogeneous network, corresponding to said optimized set.

The present invention provides in a further aspect, a method for optimisation of radio coverage in a heterogeneous network comprising at least one macro cell and at least one small cell, comprising optimising a virtual collection of users associated with cells of the network by adjusting handover conditions to neighbouring cells to give a maximised value of a preselected Key Performance Indicator (KPI) for said collection of user stations, and including:

providing a database of data throughput values against cell parameters for simulated propagation and traffic conditions, using said throughput values in the database, together with one or more existing parameters of said network, to calculate therefrom KPI values of said preselected KPI, introducing handover bias values to be applied to each said small cell, recalculating said KPI values for different bias values, and optimising said bias values on the basis of a maximised value of said preselected KPI.

The invention also provides apparatus for carrying out the aforementioned aspects of the invention.

Brief Description of the Drawings

Embodiments of the invention will now be described, by way of example only, with reference to the accompanying drawings, wherein:

Figure 1 is a block diagram of a first embodiment of a load balancing optimiser structure, incorporated in an RNC,
Figure 2 is a table showing by way of example two elements of a 3-D grid of a database of this embodiment for 2 and 20 UEs per cell for the PedA 3km/h channel;
Figure 3 is a table illustrating an example of selection, taking place in a second optimization stage, of a Candidate Group of UEs;
Figure 4 is a block diagram of a second embodiment of a load balancing optimiser structure, incorporated in an RNC; and
Figure 5 comprises Cumulative Distribution function (CDF) graphs illustrating typical simulation results of the second embodiment in 100 trials with random pico cells and UE locations.

Description of Embodiments

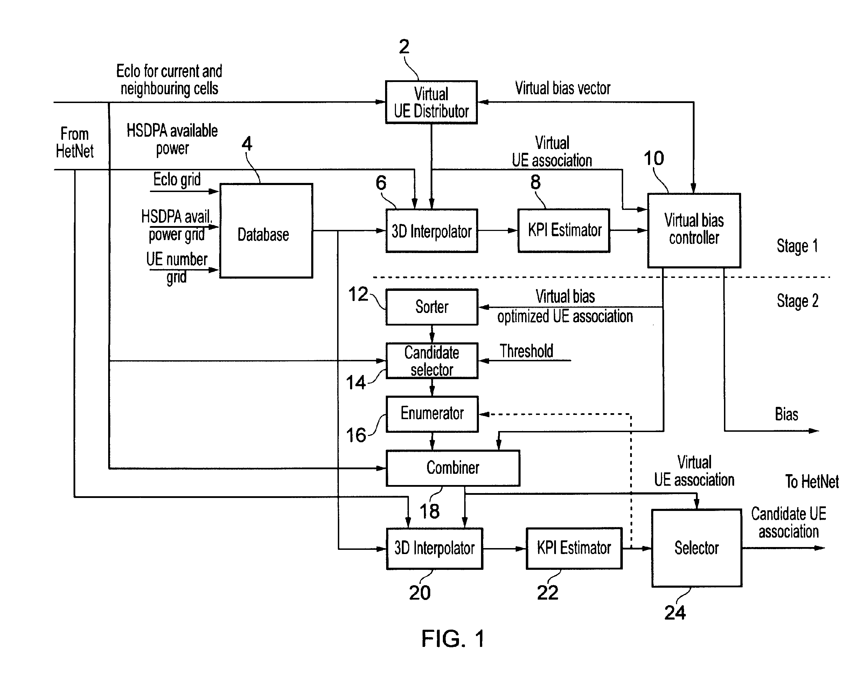

Referring to Figure 1, a first embodiment of an optimiser structure, incorporated in an RNC, is divided into two stages as indicated by dotted lines: Stage 1 and Stage 2. Stage 1 consists of the following functional blocks: Virtual UE Distributor 2, Database 4, 3D Interpolator 6, KPI Estimator 8, Virtual bias controller 10. Stage 2 consists of the following functional blocks: Sorter 12, Candidate selector 14, Enumerator 16, Combiner 18, 3D Interpolator 20, KPI Estimator 22, and Selector 24.

The Database 4, representing average throughput, is formed by means of preliminary system level simulations in typical propagation and traffic conditions for all types of cell within a network for high speed downlink packet access (HSDPA) on a 3-dimensional (3D) grid, the grid dimensions being 1) UE Eclo, 2) UE number per cell, and 3) available power. The RNC (Radio Network Controller) of the network collects Eclo from all HSDPA UEs in the Macro-sector (associated with any type of cell within the domain of the macro cell) for their current BS (Base Station, Node B) association as well as for their neighbouring BSs. Also, the power available for HSDPA is known at the RNC for all BSs. The 3D Interpolator 6 calculates throughput for each HSDPA UE in the Macro-sector based on the power available for HSDPA, the virtual Eclo at UEs and the virtual number of HSDPA UEs per macro and per small (pico) cell by using the Throughput Grid from the Database 4 The preselected key performance indicator (KPI) used for bias optimization (Cell Edge Throughput) is calculated in the KPI Estimator 8 for each virtual UE and sent to the Virtual bias controller 10. The Virtual bias controller 10 collects KPI values for all bias values that it generates according to some numerical optimization algorithm. The Virtual UE Distributor 2, taking as an input Eclo values for current and neighbouring cells in the Het Net, uses the bias values generated by the Virtual bias controller 10 for each pico cell to calculate the virtual UE association, that is the virtual UEs associated with the pico cell for the given bias of the cell pilot signal strength. After calculation of the KPI for the virtually associated UEs corresponding to the Virtual bias values generated by the Virtual bias controller 10, the Virtual bias controller finds the bias for each pico BS that maximizes the KPI of the UEs ("optimization KPI") and calculates the first stage, Stage 1, bias-optimized UE association and the corresponding throughput distribution. The output of stage 1 which is sent to Stage 2 is a Virtual biased optimised UE association, comprising a UE association vector and the corresponding UE throughput values. In this embodiment, the computed virtual bias values are sent to the HetNet, the RNC requiring these bias values to be adopted by pico cells within the HetNet.

At the second optimization stage, Stage 2, and as explained in more detail below, the Sorter 12 ranks the UEs in the output from Stage 1according to their impact on the optimization KPI. Then, the Candidate selector 14, using Eclo from the HetNet for current and neighbouring cells, forms a limited group of UEs, which should be tested in terms of re-association to the neighbouring BSs. This group contains UEs that may have significant impact on the optimization KPI and that have neighbouring BSs with Eclo difference less than a given threshold. The Enumerator 16 generates UE associations in the group, which are combined with the rest of UEs in the Combiner 18, and after 3D interpolation at 20 and KPI estimation at 22, the Selector 24 finds the best UE association, which maximises KPI values. Then the RNC sends the best UE association to the HetNet.

Detailed Explanation

1. The Database 4 can be formed by means of any appropriate system level simulator, particularly, the LUPUS WCDMA simulator [S. Brueck, E. Jugl, H.-J. Kettschau, M. Link, J. Mueckenheim, A. Zaporozhets, "Radio resource management in HSDPA and HSUPA," Bell Labs Technical Journal, vol. 11, no. 4, pp. 151-167, 2007.]. 3D LUPUS-based Eclo to HSDPA, full buffer FTP throughput mapping for the given number of UEs per cell, and average percentage of the power available for HSDPA, can take into account the following:

- proportional fairness (PF) scheduling
- transmit power dynamically allocated to R99 UEs (Release 99 3GPP)
- transmit power dynamically allocated to the high speed control channel (HS-SCCH). Using a full buffer traffic model for the Database is justified for overloaded networks even if the actual high data rate UEs correspond to other traffic models as illustrated by simulations below.

One example of the 3D grid is the following:

- [1,2,3,4,5,10,20,30,40,50,60] UEs per cell,
- [-21:1:-10] dB Eclo,
- [7:10:77] % of maximum transmit power for average HSDPA available power.

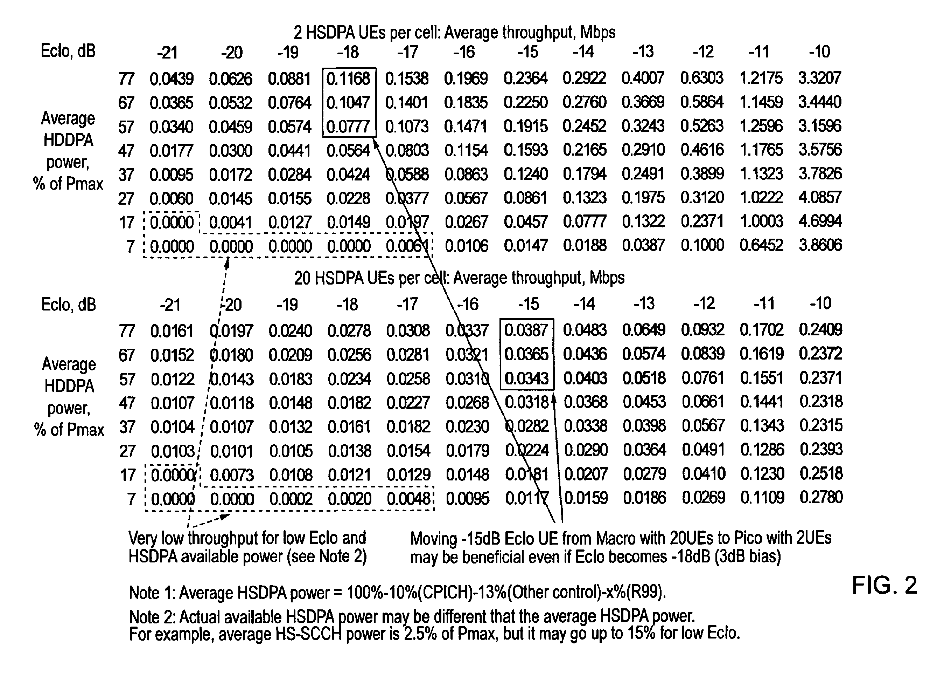

Two elements of this grid for 2 UEs (pico cell) and 20 UEs (macro cell) per cell are shown in Fig. 2 for the PedA 3km/h channel (pico cells are not suitable for high mobility traffic) and no receive diversity for all UEs with 5000 seconds of averaging time for each point in the grid. It will be noted that, for example, for an Eclo of -15dB in the macro cell, the average throughput for a UE is such that improvement in throughput may occur if the UE is reassociated with a pico cell having a lower Eclo of -18dB, and making three UEs in the pico cell.

2. 3D Interpolator 6 is a conventional, e.g. linear, interpolator.

3. KPI Estimators 8, 22 calculates some KPI of all UEs in the macro cell. For example, for the cell edge throughput KPI, the KPI Estimator calculates the throughput cumulative distribution function (CDF) and sends its 5% point to the output.

4 The Virtual bias controller 10 implements any numerical search algorithm, for example, the genetic algorithm or the exhaustive search algorithm. In the case of 2 pico cells in the Macro-sector and a bias grid of [0:1:6] dB, the exhaustive search Selector generates 49 bias value vectors: [0,0], [0,1],...,[0,6], [1,0],...,[1,6],...,[6,6] dB. Then, the Virtual bias controller collects 49 KPI Values, finds the bias vector corresponding to the maximum KPI and sends it to its output. Also, the UE association vector and the corresponding UE throughput values corresponding to this bias vector are sent to the Sorter input 12 as the Virtual bias optimized UE association. The elements of the UE association vector indicate the corresponding BS for each UE in the Macro-sector.

5. The Virtual UE Distributor 2 uses the actual Eclo values for the current and neighbouring BSs to calculate the virtual UE association, which would be observed if new bias values would be used at the pico BSs. Particularly, a serving BS (macro or pico) $i$ is selected for UE $j$ according to equation

$$i = \arg \max_{k \in S}(EcIo_{k,j} + b_k),$$ where S rep-

resents the set of candidate serving BSs, $Eclo_{kj}$ is the Eclo in dB for the $j$ th UE observed at the $k$ th BS, and $b_k$ is the bias value in dB associated with the $k$th BS. After virtual UE association for the given bias vector, the corresponding Eclo values and UE numbers are sent to the output.

6. The Sorter 12 ranks UEs according to their potential impact on the optimization KPI. Particularly, for the cell edge throughput, the Sorter just puts UEs in throughput increasing order, assuming that low throughput UEs most significantly affect this KPI - these are the "worst case" UEs, in that a user cannot be guaranteed a better throughput than cell-edge throughput..

7. The Candidate selector 14, using Eclo from the HetNet for current and neighbouring cells, forms a group of $K_g$ UEs, which should be tested in terms of re-association to the neighbouring BSs. This group contains UEs that may have significant impact on the optimization KPI defined at the output of the Sorter 12 and they have neighbouring BSs with Eclo difference below a given threshold $F$. In the case of the cell edge throughput KPI, the Candidate selector finds $K_g$ UEs with the lowest throughput if $Eclo_{BS_0}$ / $Eclo_{BS_m} < F$ for $m > 0$, where $BS_0, BS_1, ..., BS_m$ is the BS ranking for the given UE in terms of the decreasing Eclo. The Candidate selector sends 2 vectors to its output: the list of UEs in the group, and the corresponding numbers of the neighbouring BSs m satisfying the condition above. The reason for such design of the Candidate selector is to define reasonable small group of UEs for feasible search that contain UEs with potentially efficient re-association ability to improve the KPI value.found at the bias optimization stage.

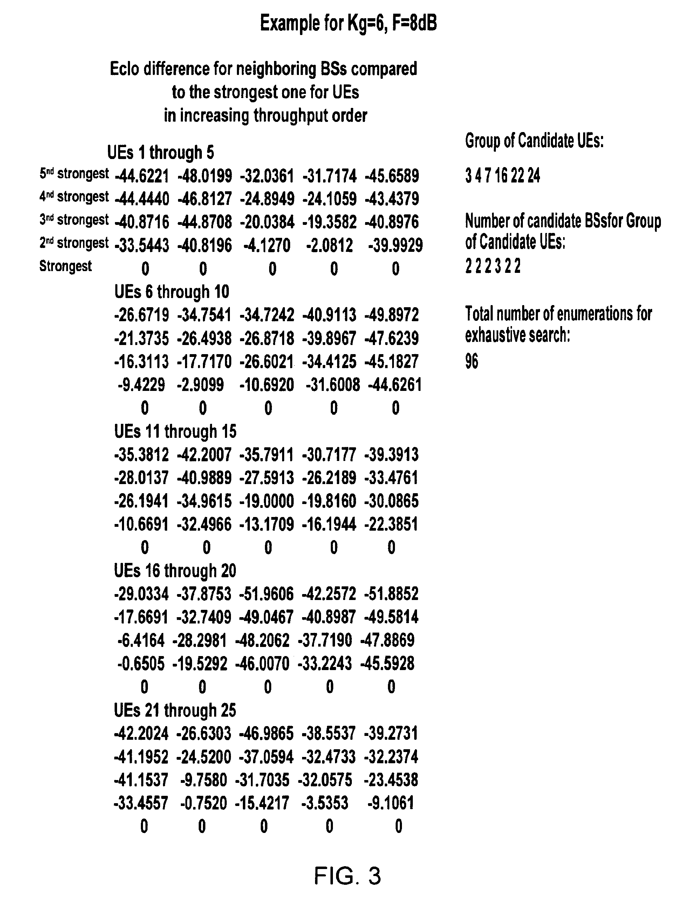

8. The Enumerator 16 generates possible combinations of $K_g$ UEs in the selected group according to some integer programming algorithm, for example, exhaustive search (no feedback from the KPI Estimator 22), integer genetic or simulated annealing algorithms (dotted line feedback from the KPI Estimator 22). One example of selection of the Candidate Group of $K_g$ = 6 UEs out of 25 UEs at the output of the Sorter with $F$ = 8 dB threshold leading to totally 96 enumerations in the group is illustrated in Fig. 3.

In Figure 3, 25 UEs are listed together with Eclo difference for current base station association, and 2nd through 6th strongest base station associations. This shows that from the 25 UEs, a group comprising numbers 3, 4, 7, 16, 22, 24 are the best candidates with possibly 2, 2, 2, 3, 2, 2 respectively associations. For example UE 3 has second strongest BS with -4.1270 dBm difference, which is within the 8bB threshold, but the 3rd strongest with -20.0384 dB difference, is not. UE16 has both 2nd strongest at -0.6505 dBm and 3rd strongest at -6.4164 dBm within the 8dB threshold.

9. The combiner 18 adds the rest of UEs in the Macro-sector to each combination of UEs in the group and sends it to the second 3D Interpolator 20, with input of HSDPA available power from the HetNet, and KPI Estimator 22 to compute average throughput and cell edge throughput, similarly to the first stage.

10. The Selector 24 finds the UE association that gives the best KPI and sends it to the' HetNet.

The embodiment can be iteratively implemented at an RNC starting with some, e.g. 0 dB, bias for all Pico-cells, to get the initial average available HSDPA power and UE association. The iteration interval depends on network variability and it can be in order of minutes in slowly changing scenarios. Each iteration may take as its starting point the UE Association sent to the HetNet by the previous iteration, and may employ either or both optimisation stages. As preferred however, a full scale optimization is employed whenever a new set of Eclo reports arrives from the network. If these new reports are close to the ones at the previous iteration, then the new association will be similar to the previous one.

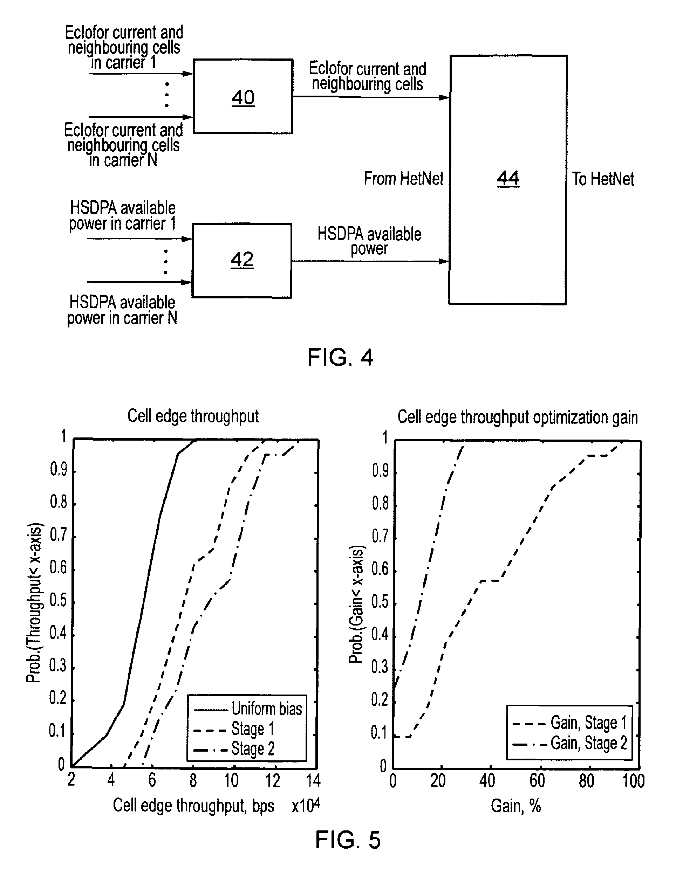

The second embodiment is shown in Fig. 4. It is employed with a multi-band (multi-carrier) WCDMA HetNet with a plurality of carriers N spaced apart in frequency. The Eclo information from all UEs in N carriers and HSDPA available power from all Small cells in N carriers are collected from the HetNet by means of respective collectors 40, 42 (for the case where N=2; a larger number of collectors will be provided for a correspondingly larger number of carriers), and sent to an optimiser 44, which is essentially the same as that shown in Figure 1. In this embodiment however, a single base station is regarded by the optimiser 44 as N separate base stations, but operating on different frequencies. In this case, bias values and direct UE association generated by the optimiser control both intra-carrier and inter-carrier handovers. For example, in the dual carrier case with 4 small cells per Macro-sector per carrier, totally 10 BSs are potentially available for each user in the Macro-sector leading up to 10 bias values generated by the Virtual bias controller and potentially 10 association options to be analyzed in the Candidate selector. Thus the computations required become more complex.

Efficiency of the second embodiment is illustrated by the following simulation results.

Simulation scenario according to 3GPP TR 36.814 V9.0.0 (2010-03), "Further advancements for E-UTRA physical layer aspects. Annex A: Simulation model":

- 2 carriers of 5 MHz band
- 7 hexagonal Macro sectors with 4 randomly placed small cells per carrier
- Pathloss modes: L=128.14+37.6log10(R) (Macro), L=140.7+36.7log10(R) (Small)
- 3GPP horizontal and vertical Macro antenna patterns
- 17 dB and 8 db Macro and Small antenna gain, 3dB cable loss
- 43dBm transmit power for Macro BS in carrier 1
- 30dBm transmit power for Macro BS in carrier 2, and Small cell BSs in both carriers,
- 10% pilot power
- 100dBm noise power
- 500m inter site distance
- Full buffer traffic model
- Small cell BS and UE dropping according to Configuration 4b [as defined in LUPUS] for all UEs. Particularly, totally 60 UEs per each carrier are allocated in a Macro-sector, including 20 uniformly distributed UEs and 10 UEs uniformly distributed around each Small cell with 40 m radius
- Min distance: 75 m PicoBS-MacroBS, 40m PicoBS-PicoBS, 35m UE-MacroBS, 10m UE-PicoBS.

Implementation parameters are as follows: Genetic Algorithm (GA) for the Virtual bias controller, exhaustive search for the Enumerator, $K_g$ = 10, $F$ = 4 dB, cell edge (5%) throughput KPI.

Typical simulation results in 21 dual carrier scenarios with random pico cells and UE locations are presented in Fig. 5. Particularly, the left plot shows the cumulative distributed functions (CDF) of the cell edge throughput for the following solutions:

- Uniform optimized bias values for all Small cells in each carrier (baseline, solid blue curve): 3 dB in carrier 1, 2 dB in carrier 2, and 1 dB for the Macro BS in carrier 2. No bias is associated with the Macro BS in carrier 1.
- Non-uniform bias values (stage 1, dashed green curve): 9 bias values per Macro sector are optimized according to stage 1 of the embodiment of Figure 4.
- Direct user association (stage 2, dashed-dotted red curve): 10 selected users are re-allocated according to stage 2 of the embodiment of Figure 4.

A critical area is CDF = 0.05 on the y-axis, corresponding to cell edge throughput. It may be seen there is a significant improvement for stage 1 optimisation, and even more improvement for stage 2 of the optimization, in that the users may expect a significantly improved cell edge throughput.

The CDFs of the corresponding gains are presented in the right plot in Fig. 5, wherein stage 1 optimisation is shown as a dashed green curve, and stage 2 optimisation is shown as a stage 2, dashed-dotted red curve. This illustrates that the second embodiment provides significant improvements in load balancing.

Embodiments of this invention:

allow network improvement when using small cell products within existing Macro-cell deployments;

may give up to 100% gain compared to the non-optimized or only bias-optimized UE associations;

provide optimization of UE associations, which is a realistic approach for coverage and loading control in WCDMA HetNet. Embodiments of the invention can also be used in LTE systems.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

**Claims**

1. A method for optimisation of cell loads in a heterogeneous network of a mobile telecommunications system comprising at least one macro cell and at least one small cell , comprising forming a group of user stations from user stations which may be allocated to the network, which group may have a significant impact on a preselected Key Performance Indicator (KPI) of the network, and testing reassociations with neighbouring cells of user stations within said group on the basis of signal reports from the heterogeneous network, including calculation of values of said preselected KPI of each user station within said group for each reassociation, in order to define, on the basis of said calculation of KPI values an optimized set of user stations associated with the cells in the network,
and requiring reassociation of user stations within said heterogeneous network, corresponding to said optimized set.

**2.** A method according to claim 1, wherein said forming a group involves sorting user stations which may be allocated to the network on the basis of respective values of said preselected KPI, preferably Cell Edge throughput, and selecting from those user stations whose KPI value indicate they may have said significant impact, user stations having a difference between their current Eclo value and their Eclo value for a neighbouring cell, as reported by the heterogeneous network, which is less than a predetermined threshold value.

**3.** A method according to claim 2, including enumerating the possible reassociations of user stations within said group with neighbouring cells having said difference less than said predetermined value, recalculating respective values of said preselected KPI for each possible reassociation, and selecting reassociations, based on maximising values for said preselected KPI.

**4.** A method according to claim 3, including in said recalculating step, an interpolation which computes for each user station a throughput value based on available power within the associated cell, Eclo value, and number of user stations within the respective cell.

**5.** A method for optimisation as claimed in any preceding claim including:

a first optimisation stage which involves optimising a virtual collection of user stations associated with the network by adjusting handover conditions of each said small cell to neighbouring cells to give a maximised value of said preselected Key Performance Indicator (KPI) for said collection of user stations,
a second optimisation stage which involves forming a group of user stations from the optimised collection of user stations allocated to the network, which group may have a significant impact on said preselected Key Performance Indicator (KPI) for the network, and testing reassociations with neighbouring cells of user stations within said group on the basis of signal reports from the heterogeneous network, including calculation of values of said preselected KPI of each user station within said group, in order to define, on the basis of said calculation of KPI values, an optimized set of user stations associated with the cells in the network, and requiring reassociation of user stations within said heterogeneous network, corresponding to said optimized set.

**6.** A method according to claim 5, wherein said first optimisation stage includes providing a database of data throughput values against cell parameters for simulated propagation and traffic conditions, the parameters preferably including number of user stations per cell, available downlink power and Eclo values, and using data throughput values of the database together with one or more existing parameters of said network, to calculate therefrom values of said preselected KPI.

**7.** A method according to claim 6 and wherein a virtual bias process is carried out to calculate change in said values of said KPI for changes to each small cell bias for handover decisions.

**8.** A method according to claim 7, wherein a user station distribution process is carried out which accepts an input variable of the HetNet such as actual Eclo for current and neighbouring cells, and processes said input variable with the output from the virtual bias process, to provide a user station virtual association for the cells of the network.

**9.** A method according to claim 8, wherein said virtual bias process and said distribution process are carried out iteratively in order to provide an optimised user station virtual association on the basis of a maximised value of said KPI.

**10.** A method according to any preceding claim, wherein said network comprises a plurality of carriers spaced apart in frequency, and the aforesaid method steps are carried out over all carriers for each macro sector, wherein a single base station is regarded as a plurality of separate base stations, each operating with a single one of said carriers, and wherein the aforesaid method steps relate to both intra-carrier and inter-carrier handovers.

**11.** A method according to any preceding claim wherein the method is carried out separately for each macro-cell and included small cells within the domain of the macro cell.

**12.** Apparatus for optimisation of radio coverage in a heterogeneous network comprising at least one macro cell and at least one small cell including:

means for forming a group of user stations from a set of user stations which may be allocated to the network, which group may have a significant impact on a preselected Key Performance Indicator (KPI) of the network, means for testing reassociations with neighbouring cells of user stations within said group on the basis of signal reports from the heterogeneous network, including calculation of values of said preselected KPI of each user station within said group, in order to define, on the basis of said calculation of KPI values an optimized set of user stations associated with the cells in the network, and means requiring reassociation of user stations within said heterogeneous network, corresponding to said optimized set.

13. Apparatus as claimed in claim 12, wherein the apparatus includes a first optimisation stage which includes means for optimising a virtual collection of user stations associated with the cell by adjusting handover conditions of each said small cell to neighbouring cells to give a maximised value of said preselected Key Performance Indicator (KPI) for said collection of user stations, and including a second optimisation stage, which includes the means set forth in claim 12.

14. Apparatus as claimed in claim 12 or 13, wherein the apparatus is incorporated in a Radio Network Controller in a WCDMA network.

15. A method for optimisation of cell loads in a heterogeneous network of a mobile telecommunications system comprising at least one macro cell and at least one small cell, the method comprising optimising a virtual collection of users associated with cells of the network by adjusting handover conditions to neighbouring cells to give a maximised value of a preselected Key Performance Indicator (KPI) for said collection of user stations, and including:

> providing a database of data throughput values against cell parameters for simulated propagation and traffic conditions, using said throughput values in the database, together with one or more existing parameters of said network, to calculate therefrom KPI values of said preselected KPI, introducing handover bias values to be applied to each said small cell, recalculating said KPI values for different bias values, and optimising said bias values on the basis of a maximised value of said preselected KPI.

16. Apparatus for optimisation of cell loads in a heterogeneous network of a mobile telecommunications system comprising at least one macro cell and at least one small cell, the apparatus being arranged to optimise a virtual collection of users associated with cells of the network by adjusting handover conditions to neighbouring cells to give a maximised value of a preselected Key Performance Indicator (KPI) for said collection of user stations, and including:

> a database of data throughput values against cell parameters for simulated propagation and traffic conditions, means employing said throughput values in the database, together with one or more existing parameters of said network, for calculating therefrom KPI values of said preselected KPI, means for introducing handover bias values to be applied to each said small cell, recalculating said KPI values for different bias values, and optimising said bias values on the basis of a maximised value of said preselected KPI .

**Amended claims in accordance with Rule 137(2) EPC.**

1. A method for optimisation of cell loads in a heterogeneous network of a mobile telecommunications system comprising at least one macro cell and at least one small cell, and a plurality of user stations, the method comprising defining a preselected Key Performance Indicator, which has an overall value relating to the network, and an individual value relating to each user station, and comprising a first optimisation stage which involves optimising (2-10) a collection of user stations potentially to be associated with the network to give a maximised value of said overall value of said Key Performance Indicator for the optimised collection of user stations, and **characterised by** a second optimisation stage which comprises forming (12, 14) a group of user stations from said optimised collection of user stations, each of which group has a more significant impact on said overall value of said Key Performance Indicator, than other user stations of said optimised collection, and testing (16-24) reassociations with neighbouring cells of user stations within said group on the basis of signal reports from the heterogeneous network, including calculation (22) of values of said preselected Key Performance Indicator of each user station within said group for each reassociation, in order to define, on the basis of said calculation of Key Performance Indicator values an optimized set of user stations to be associated with the cells in the network, and requiring reassociation (24) of user stations within said heterogeneous network, corresponding to said optimized set.

2. A method according to claim 1, wherein said forming a group involves sorting (12) user stations of said optimised collection on the basis of respective values of said preselected Key Performance Indicator, and selecting (14) from those user stations whose Key Performance Indicator value indicate they have said more significant impact, user stations having a difference between their current signal to noise ratio value and their signal to noise ratio value for a neighbouring cell, as reported by the heterogeneous network, which is less than a predetermined threshold value.

**3.** A method according to claim 2, wherein for each possible reassociation (16) of user stations within said group with neighbouring cells having said difference less than said predetermined value, recalculating (20, 22) values of said preselected Key Performance Indicator for each possible reassociation, and selecting (24) reassociations, based on maximising values for said preselected Key Performance Indicator.

**4.** A method according to claim 3, including in said recalculating step, an interpolation (20) which computes for each user station a throughput value based on available power within the associated cell, signal to noise ratio value, and number of user stations within the respective cell.

**5.** A method for optimisation as claimed in claim 4, wherein said interpolation involves use of a database (4) of data throughput values against cell parameters for simulated propagation and traffic conditions, the parameters including at least one of number of user stations per cell, available downlink power and signal to noise ratio values, and using data throughput values of the database together with one or more parameters of said network obtained from signal reports, to calculate therefrom values of said preselected Key Performance Indicator.

**6.** A method according to claim 5, wherein said first optimisation stage includes using said database (4) of data throughput values against cell parameters for simulated propagation and traffic conditions, the parameters including at least one of number of user stations per cell, available downlink power and signal to noise ratio values, and using data throughput values of the database together with one or more parameters of said network obtained from signal reports, to calculate therefrom values of said preselected Key Performance Indicator.

**7.** A method according to claim 6 and wherein in the first optimisation stage a bias process (6, 8, 10) is carried out to calculate change in said values of said Key Performance Indicator for changes to each small cell bias for handover decisions.

**8.** A method according to claim 7, wherein a user station association process (2) is carried out which accepts an input variable of the HetNet for current and neighbouring cells, and processes said input variable with the output from said bias process, to provide a user station reassociation for the cells of the network.

**9.** A method according to any preceding claim, wherein said first and second optimisation stages are carried out iteratively in order to provide an optimised user station.

**10.** A method according to any preceding claim, wherein said network comprises a plurality of carriers spaced apart in frequency (40, 42), and the aforesaid method steps are carried out over all carriers for each macro sector (44), wherein a single base station is regarded as a plurality of separate base stations, each operating with a single one of said carriers, and wherein the aforesaid method steps relate to both intra-carrier and inter-carrier handovers.

**11.** A method according to any preceding claim wherein the method is carried out separately for each macro cell and included small cells within the domain of the macro cell.

**12.** Apparatus for optimisation of cell loads in a heterogeneous network of a mobile telecommunications system comprising at least one macro cell and at least one small cell, and a plurality of user stations, comprising a first optimisation stage which includes means (2-10) for optimising a collection of user stations potentially to be associated with the network to give a maximised value, for the optimised collection of user stations, of a preselected Key Performance Indicator, which has an overall value relating to the network, and individual values relating to each user station, and

**characterised by** a second optimisation stage which includes means (12, 14) for forming a group of user stations from said optimised collection of user stations, each of which group has a more significant impact on said overall value of said Key Performance Indicator, than other user stations of said optimised collection, and means (16-24) for testing reassociations with neighbouring cells of user stations within said group on the basis of signal reports from the heterogeneous network, including means (22) for calculation of values of said preselected Key Performance Indicator of each user station within said group for each reassociation, in order to define, on the basis of said calculation of Key Performance Indicator values an optimized set of user stations associated with the cells in the network,
and means (24) for requiring reassociation of user stations within said heterogeneous network, corresponding to said optimized set.

**13.** Apparatus as claimed in claim 12, wherein the apparatus includes means for sorting (12) user stations of said optimised collection on the basis of respective values of said preselected Key Performance Indicator, and means for selecting (14) from those user stations whose Key Performance Indicator value indicate they have said more significant impact, user stations having a difference between their current signal to noise ratio value and their signal to noise ratio value for a neighbouring cell, as reported by the heterogeneous network, which is less than a predetermined threshold value.

**14.** Apparatus as claimed in claim 12 or 13, wherein the apparatus is incorporated in a Radio Network Controller in a WCDMA network.

FIG. 1

From HetNet

Eclo for current and neighbouring cells

HSDPA available power

Eclo grid

HSDPA avail. power grid

UE number grid

Database — 4

Virtual UE Distributor — 2

Virtual bias vector

3D Interpolator — 6

Virtual UE association

KPI Estimator — 8

Virtual bias controller — 10

Stage 1

Stage 2

Bias

Virtual bias optimized UE association

Sorter — 12

Candidate selector — 14

Threshold

Enumerator — 16

Combiner — 18

3D Interpolator — 20

KPI Estimator — 22

Virtual UE association

Selector — 24

To HetNet

Candidate UE association

2 HSDPA UEs per cell: Average throughput, Mbps

| Eclo, dB | -21 | -20 | -19 | -18 | -17 | -16 | -15 | -14 | -13 | -12 | -11 | -10 |
|---|---|---|---|---|---|---|---|---|---|---|---|---|
| 77 | 0.0439 | 0.0626 | 0.0881 | 0.1168 | 0.1538 | 0.1969 | 0.2364 | 0.2922 | 0.4007 | 0.6303 | 1.2175 | 3.3207 |
| 67 | 0.0365 | 0.0532 | 0.0764 | 0.1047 | 0.1401 | 0.1835 | 0.2250 | 0.2760 | 0.3669 | 0.5864 | 1.1459 | 3.4440 |
| 57 | 0.0340 | 0.0459 | 0.0574 | 0.0777 | 0.1073 | 0.1471 | 0.1915 | 0.2452 | 0.3243 | 0.5263 | 1.2596 | 3.1596 |
| 47 | 0.0177 | 0.0300 | 0.0441 | 0.0564 | 0.0803 | 0.1154 | 0.1593 | 0.2165 | 0.2910 | 0.4616 | 1.1765 | 3.5756 |
| 37 | 0.0095 | 0.0172 | 0.0284 | 0.0424 | 0.0588 | 0.0863 | 0.1240 | 0.1794 | 0.2491 | 0.3899 | 1.1323 | 3.7826 |
| 27 | 0.0060 | 0.0145 | 0.0155 | 0.0228 | 0.0377 | 0.0567 | 0.0861 | 0.1323 | 0.1975 | 0.3120 | 1.0222 | 4.0857 |
| 17 | 0.0000 | 0.0041 | 0.0127 | 0.0149 | 0.0197 | 0.0267 | 0.0457 | 0.0777 | 0.1322 | 0.2371 | 1.0003 | 4.6994 |
| 7 | 0.0000 | 0.0000 | 0.0000 | 0.0000 | 0.0061 | 0.0106 | 0.0147 | 0.0188 | 0.0387 | 0.1000 | 0.6452 | 3.8606 |

Average HDDPA power, % of Pmax

20 HSDPA UEs per cell: Average throughput, Mbps

| Eclo, dB | -21 | -20 | -19 | -18 | -17 | -16 | -15 | -14 | -13 | -12 | -11 | -10 |
|---|---|---|---|---|---|---|---|---|---|---|---|---|
| 77 | 0.0161 | 0.0197 | 0.0240 | 0.0278 | 0.0308 | 0.0337 | 0.0387 | 0.0483 | 0.0649 | 0.0932 | 0.1702 | 0.2409 |
| 67 | 0.0152 | 0.0180 | 0.0209 | 0.0256 | 0.0281 | 0.0321 | 0.0365 | 0.0436 | 0.0574 | 0.0839 | 0.1619 | 0.2372 |
| 57 | 0.0122 | 0.0143 | 0.0183 | 0.0234 | 0.0258 | 0.0310 | 0.0343 | 0.0403 | 0.0518 | 0.0761 | 0.1551 | 0.2371 |
| 47 | 0.0107 | 0.0118 | 0.0148 | 0.0182 | 0.0227 | 0.0268 | 0.0318 | 0.0368 | 0.0453 | 0.0661 | 0.1441 | 0.2318 |
| 37 | 0.0104 | 0.0107 | 0.0132 | 0.0161 | 0.0182 | 0.0230 | 0.0282 | 0.0338 | 0.0398 | 0.0567 | 0.1343 | 0.2315 |
| 27 | 0.0103 | 0.0101 | 0.0105 | 0.0138 | 0.0154 | 0.0179 | 0.0224 | 0.0290 | 0.0364 | 0.0491 | 0.1286 | 0.2393 |
| 17 | 0.0000 | 0.0073 | 0.0108 | 0.0121 | 0.0129 | 0.0148 | 0.0181 | 0.0207 | 0.0279 | 0.0410 | 0.1230 | 0.2518 |
| 7 | 0.0000 | 0.0000 | 0.0002 | 0.0020 | 0.0048 | 0.0095 | 0.0117 | 0.0159 | 0.0186 | 0.0269 | 0.1109 | 0.2780 |

Average HDDPA power, % of Pmax

Very low throughput for low Eclo and HSDPA available power (see Note 2)

Moving -15dB Eclo UE from Macro with 20UEs to Pico with 2UEs may be beneficial even if Eclo becomes -18dB (3dB bias)

Note 1: Average HSDPA power = 100%-10%(CPICH)-13%(Other control)-x%(R99).

Note 2: Actual available HSDPA power may be different that the average HSDPA power. For example, average HS-SCCH power is 2.5% of Pmax, but it may go up to 15% for low Eclo.

FIG. 2

EP 2 728 926 A1

## Example for Kg=6, F=8dB

### Eclo difference for neighboring BSs compared to the strongest one for UEs in increasing throughput order

| | UEs 1 through 5 | | | | |
|---|---|---|---|---|---|
| 5nd strongest | -44.6221 | -48.0199 | -32.0361 | -31.7174 | -45.6589 |
| 4nd strongest | -44.4440 | -46.8127 | -24.8949 | -24.1059 | -43.4379 |
| 3nd strongest | -40.8716 | -44.8708 | -20.0384 | -19.3582 | -40.8976 |
| 2nd strongest | -33.5443 | -40.8196 | -4.1270 | -2.0812 | -39.9929 |
| Strongest | 0 | 0 | 0 | 0 | 0 |

**UEs 6 through 10**

| | | | | |
|---|---|---|---|---|
| -26.6719 | -34.7541 | -34.7242 | -40.9113 | -49.8972 |
| -21.3735 | -26.4938 | -26.8718 | -39.8967 | -47.6239 |
| -16.3113 | -17.7170 | -26.6021 | -34.4125 | -45.1827 |
| -9.4229 | -2.9099 | -10.6920 | -31.6008 | -44.6261 |
| 0 | 0 | 0 | 0 | 0 |

**UEs 11 through 15**

| | | | | |
|---|---|---|---|---|
| -35.3812 | -42.2007 | -35.7911 | -30.7177 | -39.3913 |
| -28.0137 | -40.9889 | -27.5913 | -26.2189 | -33.4761 |
| -26.1941 | -34.9615 | -19.0000 | -19.8160 | -30.0865 |
| -10.6691 | -32.4966 | -13.1709 | -16.1944 | -22.3851 |
| 0 | 0 | 0 | 0 | 0 |

**UEs 16 through 20**

| | | | | |
|---|---|---|---|---|
| -29.0334 | -37.8753 | -51.9606 | -42.2572 | -51.8852 |
| -17.6691 | -32.7409 | -49.0467 | -40.8987 | -49.5814 |
| -6.4164 | -28.2981 | -48.2062 | -37.7190 | -47.8869 |
| -0.6505 | -19.5292 | -46.0070 | -33.2243 | -45.5928 |
| 0 | 0 | 0 | 0 | 0 |

**UEs 21 through 25**

| | | | | |
|---|---|---|---|---|
| -42.2024 | -26.6303 | -46.9865 | -38.5537 | -39.2731 |
| -41.1952 | -24.5200 | -37.0594 | -32.4733 | -32.2374 |
| -41.1537 | -9.7580 | -31.7035 | -32.0575 | -23.4538 |
| -33.4557 | -0.7520 | -15.4217 | -3.5353 | -9.1061 |
| 0 | 0 | 0 | 0 | 0 |

Group of Candidate UEs:

3 4 7 16 22 24

Number of candidate BSs for Group of Candidate UEs:
2 2 2 3 2 2

Total number of enumerations for exhaustive search:
96

## FIG. 3

Eclofor current and
neighbouring cells
in carrier 1

⋮

Eclofor current and
neighbouring cells
in carrier N

**40**

Eclofor current and
neighbouring cells

HSDPA available
power in carrier 1

⋮

HSDPA available
power in carrier N

**42**

HSDPA available
power

From HetNet

**44**

To HetNet

FIG. 4

Cell edge throughput

Cell edge throughput optimization gain

Prob.(Throughput< x-axis)

Cell edge throughput, bps   x10$^4$

— Uniform bias
- - Stage 1
-·- Stage 2

Prob.(Gain< x-axis)

Gain, %

- - Gain, Stage 1
—·— Gain, Stage 2

FIG. 5

Europäisches
Patentamt

European
Patent Office

Office européen
des brevets

# EUROPEAN SEARCH REPORT

Application Number

EP 12 29 0382

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y<br>A | EP 2 451 214 A1 (ALCATEL LUCENT [FR])<br>9 May 2012 (2012-05-09)<br>* paragraph [0005] - paragraph [0006] *<br>* paragraph [0034] *<br>* paragraph [0054] * | 1,4,6,<br>10,11,14<br>15,16<br>2,3,5,<br>7-9,12,<br>13 | INV.<br>H04W28/08 |
| A | WO 2011/065889 A1 (ERICSSON TELEFON AB L M [SE]; KALLIN HARALD [SE]; OLIN BIRGITTA [SE]) 3 June 2011 (2011-06-03)<br>* the whole document * | 1-14 | |
| Y | GB 2 382 503 A (MOTOROLA INC [US] MOTOROLA INC [US]; MOTOROLA INC [US])<br>28 May 2003 (2003-05-28)<br>* page 8, line 23 - line 37 * | 15,16 | |
| Y | WO 2011/143815 A1 (HUAWEI TECH CO LTD [CN]; LIN JIE [GB])<br>24 November 2011 (2011-11-24)<br>* page 1, line 30 - page 2, line 2 * | 15,16 | TECHNICAL FIELDS SEARCHED (IPC) |
| A | EP 2 083 587 A1 (BRITISH TELECOMM [GB])<br>29 July 2009 (2009-07-29)<br>* paragraph [0010] - paragraph [0011] * | 15,16 | H04W |

The present search report has been drawn up for all claims

| Place of search | Date of completion of the search | Examiner |
|---|---|---|
| Munich | 31 May 2013 | Emander, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

Application Number

EP 12 29 0382

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 12 29 0382

The Search Division considers that the present European patent application does not comply with the
requirements of unity of invention and relates to several inventions or groups of inventions, namely:

1. claims: 1-14

   testing reassociations with neighbouring cells of user
   stations within a group of user stations that has been
   formed
   ---

2. claims: 15, 16

   optimising handover bias values on the basis of a maximised
   value of a KPI calculated based on cell parameters that are
   input in a database
   ---

## ANNEX TO THE EUROPEAN SEARCH REPORT
## ON EUROPEAN PATENT APPLICATION NO.

EP 12 29 0382

This annex lists the patent family members relating to the patent documents cited in  the above-mentioned European search report.
The members are as contained in the European Patent Office EDP file on
The European Patent Office is in no way liable for these particulars which are merely given for the purpose of information.

31-05-2013

| Patent document cited in search report | | | Publication date | Patent family member(s) | | | Publication date |
|---|---|---|---|---|---|---|---|
| EP | 2451214 | A1 | 09-05-2012 | EP | 2451214 | A1 | 09-05-2012 |
| | | | | TW | 201238371 | A | 16-09-2012 |
| | | | | WO | 2012059310 | A1 | 10-05-2012 |
| WO | 2011065889 | A1 | 03-06-2011 | US | 2011128862 | A1 | 02-06-2011 |
| | | | | WO | 2011065889 | A1 | 03-06-2011 |
| GB | 2382503 | A | 28-05-2003 | AU | 2002337159 | A1 | 10-06-2003 |
| | | | | GB | 2382503 | A | 28-05-2003 |
| | | | | WO | 03047291 | A1 | 05-06-2003 |
| WO | 2011143815 | A1 | 24-11-2011 | CN | 102893659 | A | 23-01-2013 |
| | | | | EP | 2572532 | A1 | 27-03-2013 |
| | | | | WO | 2011143815 | A1 | 24-11-2011 |
| EP | 2083587 | A1 | 29-07-2009 | EP | 2083587 | A1 | 29-07-2009 |
| | | | | JP | 2011510580 | A | 31-03-2011 |
| | | | | US | 2010284374 | A1 | 11-11-2010 |
| | | | | WO | 2009092990 | A1 | 30-07-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **I. GUVENC.** Capacity and fairness analysis of heterogeneous networks with range expansion and interference coordination. *IEEE Communications Letters,* October 2011, vol. 15 (10), 1084-1087
- **Q. YE ; B. RONG ; Y. CHEN ; M. AL-SHALASH ; C. CARAMANIS ; J. G. ANDREWS.** *User Association for Load Balancing in Heterogeneous Cellular Networks,* 13 May 2012, http://arxiv.org/pdf/1205.2833.pdf.

- **S. BRUECK ; E. JUGL ; H.-J. KETTSCHAU ; M. LINK ; J. MUECKENHEIM ; A. ZAPOROZHETS.** Radio resource management in HSDPA and HSUPA. *Bell Labs Technical Journal,* 2007, vol. 11 (4), 151-167
- Further advancements for E-UTRA physical layer aspects. Annex A: Simulation model. *3GPP TR 36.814 V9.0.0,* March 2010